# EUROPEAN PATENT SPECIFICATION

(11) **EP 2 980 891 B1**
(45) Date of publication and mention of the grant of the patent: **14.02.2018**
(21) Application number: 15159185.6
(22) Date of filing: 16.03.2015
(51) Int. Cl.: H01M 4/36, H01M 4/485, H01M 4/62, C01G 33/00, H01M 10/0525, H01M 4/131

(54) **COMPOSITE**
VERBUNDSTOFF
COMPOSITE

(30) Priority: 30.07.2014 JP 2014155552
(43) Date of publication of application: 03.02.2016
(73) Proprietor: Kabushiki Kaisha Toshiba, Tokyo 105-8001 (JP)
(72) Inventor: Naito, Katsuyuki, Tokyo, 105-8001 (JP); Harada, Yasuhiro, Tokyo, 105-8001 (JP); Yoshinaga, Norihiro, Tokyo, 105-8001 (JP); Akasaka, Yoshihiro, Tokyo, 105-8001 (JP); Yoshida, Yorikazu, Tokyo, 105-8001 (JP); Ise, Kazuki, Tokyo, 105-8001 (JP)
(74) Representative: Hoffmann Eitle

(56) References cited:
- EP-A1- 2 448 054
- EP-A1- 2 945 208
- WO-A2-2012/016185
- KR-A- 20140 082 225
- US-A1- 2012 305 856
- US-A1- 2012 308 891

## Description

### FIELD

Embodiments described herein relate generally to a composite, a method of manufacturing a composite, an active material, and a nonaqueous electrolyte battery.

### BACKGROUND

Recently, as a battery having a high energy density, a lithium-ion secondary battery has been developed. The lithium-ion secondary battery is anticipated as a power source for vehicles such as hybrid vehicles or electric cars. The lithium-ion secondary battery is also anticipated as an uninterruptible power supply for mobile phone base stations. Therefore, the lithium-ion secondary battery is desired to have performances other than high energy density, such as rapid charge and discharge performances and long-term reliability. A lithium-ion secondary battery capable of rapid charge and discharge not only remarkably shortens the charging time, but also makes it possible to improve performances related to the motive force of a hybrid vehicle and to efficiently recover the regenerative energy of the motive force.

In order to enable rapid charge and discharge, it is necessary for electrons and lithium ions to be able to migrate rapidly between the positive electrode and the negative electrode. When a battery using a carbon-based material in the negative electrode undergoes repeated rapid charge and/or discharge, dendrite precipitation of metal lithium occurs on the electrode. Dendrites cause internal short circuits, which can lead to heat generation and fires.

In light of this, a battery using a metal composite oxide as a negative electrode active material in place of a carbonaceous material has been developed. Particularly, in a battery using an oxide of titanium as the negative electrode active material, rapid charge and discharge can be performed stably. Such a battery also has a longer life than those using a carbonaceous material.

However, oxides of titanium have a higher potential relative to metal lithium than that of the carbonaceous material, that is, oxides of titanium are noble relative to metal lithium. Further, oxides of titanium have lower capacity per weight. Therefore, a battery using an oxide of titanium possesses a problem in that its energy density is low.

As to the capacity of the battery per unit weight, the theoretical capacity of a lithium-titanium composite oxide such as Li₄Ti₅O₁₂ is about 175 mAh/g. On the other hand, the theoretical capacity of a general graphite-based electrode material is 372 mAh/g. Therefore, the capacity density of an oxide of titanium is significantly lower than that of the carbon-based negative electrode. This is due to a reduction in substantial capacity because there are only a small number of lithium-absorption sites in the crystal structure and lithium tends to be stabilized in the structure.

In view of such circumstances, a new electrode material including Ti and Nb has been examined. Such materials are expected to have high charge and discharge capacities. Particularly, a composite oxide represented by TiNb₂O₇ has a theoretical capacity exceeding 300 mAh/g. However, the conductivity of TiNb₂O₇ is not high. Therefore, carbon materials are added to TiNb₂O₇ to increase conductivity.

various materials are studied as a carbon material used for increasing conductivity. For example, a combination of Ketjen black with a titanium-niobium composite oxide is known. In order to provide sufficient conductivity to the titanium-niobium composite oxide, however, it is required to use a large amount of the Ketjen black. Use of a large amount of the Ketjen black may cause problems of a reduced capacity and destabilization of the oxide.

Another strategy is a method in which a low molecular weight organic substance such as a dicarboxylic acid or sucrose is sintered onto the titanium-niobium composite oxide. The low molecular weight organic substance such as the dicarboxylic acid or sucrose, however, has low conductivity. For that reason, it may be necessary to use a large amount of the carbide to provide sufficient conductivity to the titanium-niobium composite oxide. In addition, the sucrose easily generates a reductive intermediate. For that reason, if a large amount of the sucrose is used, a part of the oxide is reduced, and thus a capacity is easily reduced.

In yet another strategy, there is disclosure of a technique to combine graphene with a titanium-niobium composite oxide. The graphene, however, tends to have a weak connection with the titanium-niobium composite oxide. For that reason, in a nonaqueous electrolyte battery including the combination of the graphene and the titanium-niobium composite oxide, wherein no measure is taken for the connection between the graphene and the titanium-niobium composite oxide, detachment readily occurs, leading to a reduction in capacity, when cycles are repeated.

WO 2012/016185 A2 relates to a niobium oxide useful in anodes of secondary lithium ion batteries. Such niobium oxide has formula LiₓM_{1-y}Nb_{y}Nb₂O₇, wherein 0≤x≤3, 0≤y≤1, and M represents Ti or Zr. The niobium oxide may be in the form of particles, which may be carbon coated. The document also relates to an electrode composition containing at least one or more niobium oxides of formula LiₓM_{1-y}Nb_{y}Nb₂O₇ and to electrodes, such as anodes, and batteries containing at least one or more niobium oxides of formula LiₓM_{1-y}Nb_{y}Nb₂O₇, as well as to methods of forming the above.
US 2012/305856 A1 relates to a method for preparing a Li₄NbₓTi₅₋ₓO₁₂/C nanocomposite as anode material for lithium-ion batteries, which includes the following steps: (a) obtaining a mixture of a lithium salt, niobium pentaoxide, titanium dioxide (TiO₂), and a carbon source in a selected stoichiometric ratio; (b) mixing the mixture in a dispersant to produce a slurry; (c) drying the slurry to produce a dried mixture; (d) treating the dried mixture under a protective atmosphere, according to a heating program to produce the Li₄NbₓTi₅₋ₓO₁₂/C nanocomposite, wherein the heating program comprises: calcining the dried mixture at 600 °C for 2-6 hours, heating it at a rate of 2-20 °C per minute to 950-980 °C, cooling it by natural cooling to 800-850 °C, maintaining the temperature at 800-850°C for 16 hours, and cooling it by natural cooling to room temperature.
EP 2 945 208 A1 relates to a composite (10). The composite (10) includes active material particles (12) of a titanium composite oxide or oxide of titanium, and a graphene structure (11) including a carbon material (11b). The carbon material (11b) has a graphene framework defining a graphene surface (11c). The graphene structure (11) is located in between the active material particles (12). The graphene structure (11) has at least one side surface (11a) in contact with the active material particle (12). The side surface (11a) includes the carbon material (11b) whose graphene surface (11c) is slanted relative to the side surface (11a).

### BRIEF DESCRIPTION OF THE DRAWINGS

FIG. 1 is a schematic view showing a structure of one example of composites according to a first embodiment;
FIG. 2 is a schematic view showing one example of interactions between a graphene sheet and a carbon material included in a carbon layer;
FIG. 3 is an SEM photograph showing one example of graphene sheets;
FIG. 4 is an SEM photograph showing one example of titanium-niobium composite oxide particles covered with a carbon layer;
FIG. 5 is an SEM photograph showing one example of titanium-niobium composite oxide particles not covered with a carbon layer;
FIG. 6 is a graph showing zeta potentials of a titanium-niobium composite oxide, a titanium-niobium composite oxide covered with a carbon layer, an oxidized graphene sheet, and a reduced graphene sheet;
FIG. 7 is a schematic view showing one example of interactions among a titanium-niobium composite oxide and an oxidized graphene sheet and sucrose;
FIG. 8 is a cross-sectional view showing one example of nonaqueous electrolyte batteries according to a fourth embodiment;
FIG. 9 is an enlarged cross-sectional view of part A in FIG. 8; and
FIG. 10 is an X-ray diffraction pattern of a niobium composite oxide (TiNb₂O₇) in Example 1.

### DETAILED DESCRIPTION

According to one embodiment, there is provided a composite. The composite includes a graphene sheet material, active material particles, and a carbon layer located between the graphene sheet material and the active material particles. The graphene sheet material includes at least one of a planar graphene sheet of a monoatomic layer and a laminate of 10 layers or less of the planar graphene sheets, wherein the graphene sheets have a diameter within a range of more than 50 nm ϕ and 100 µm ϕ or less. The active material particles include a titanium-niobium composite oxide. The carbon layer includes a carbon material having a n-electron system.

The embodiments will be explained below with reference to the drawings. In this case, the structures common to all embodiments are represented by the same symbols and duplicated explanations will be omitted. Also, each drawing is a typical view for explaining the embodiments and for promoting an understanding of the embodiments. Though there are parts different from an actual device in shape, dimension and ratio, these structural designs may be appropriately changed taking the following explanations and known technologies into consideration.

### (FIRST EMBODIMENT)

According to a first embodiment, there is provided a composite. The composite includes a graphene sheet material, a plurality of active material particles, and a carbon layer located between the graphene sheet material and the active material particles. The graphene sheet material includes a planar graphene sheet of a monoatomic layer or a laminate of 10 layers or less of the planar graphene sheets. The active material particles include a titanium-niobium composite oxide. The carbon layer includes a carbon material having a π-electron system.

In the composite according to the first embodiment, the graphene sheet material can function as a conductive path between the plurality of active material particles.

On the other hand, the graphene sheet material has a property in which the graphene sheet material easily moves due to flow of an electrolyte solvent or ions when it is used in a nonaqueous electrolyte battery, because of the size thereof. The carbon layer, included in the composite according to the first embodiment, however, includes a carbon material, which is located between the graphene sheet material and the active material particles, and has a n-electron system. The carbon material can prevent separation between the graphene sheet material and the active material particle resulting from weakening of connections between each other. Accordingly, when the composite according to the first embodiment is used in the nonaqueous electrolyte battery, excellent stability against repetitive charge and discharge can be exhibited.

According to the first embodiment, therefore, a composite can be provided, which allows a nonaqueous electrolyte battery capable of exhibiting excellent capacity retention to be realized.

Next, referring to drawings, the composite according to the first embodiment will be explained in more detail.

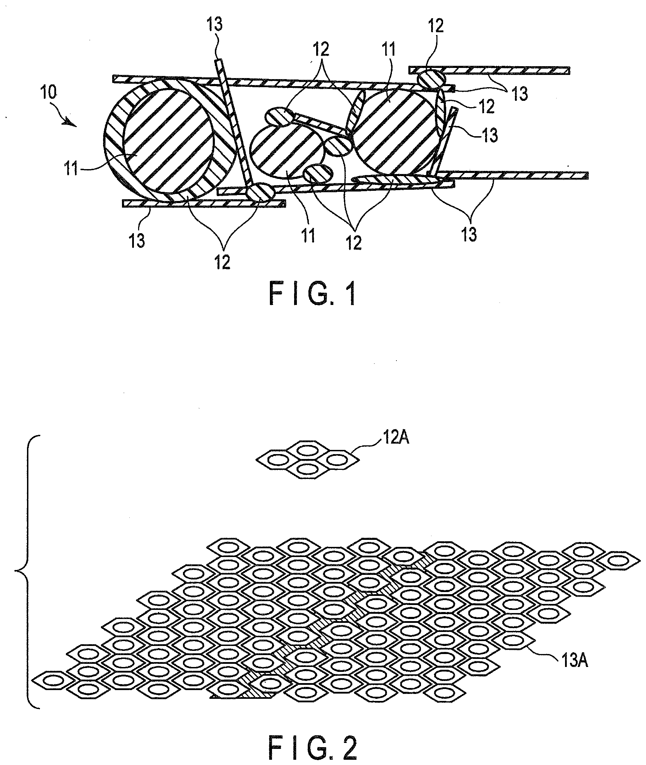

FIG. 1 is a schematic view showing a structure of one example of composites according to the first embodiment.

A composite 10, shown in FIG. 1 includes a plurality of active material particles 11, carbon layers 12 and graphene sheet materials 13. The carbon layers 12 exist around the active material particle 11. The active material particle 11 includes titanium-niobium composite oxide. The carbon layer 12 includes a carbon material having a π-electron system. As shown in FIG. 1, the carbon layer 12 may partially cover the particle 11 or completely cover the particle 11. The graphene sheet material 13 contacts the active material particle 11 via the carbon layer 12. That is, the carbon layer 12 is located between the graphene sheet material 13 and the active material particle 11. As shown in FIG. 1, the graphene sheet material 13 may directly contact the active material particle 11.

The graphene sheet material 13 can function as a conductive path between the active material particles 11.

Bonding between the graphene sheet material 13 and the active material particle 11 can be strengthened by the presence of the carbon layer 12 including the carbon material having the n-electron system. The reason thereof will be explained below, referring to FIG. 2.

FIG. 2 is a schematic view showing one example of interactions between the graphene sheet and the carbon material included in the carbon layer. Specifically, in FIG. 2, a graphene sheet 13A included in the graphene sheet material 13 is shown in a lower part, and a carbon material having a π-electron system included in the carbon layer 12, in this case, a condensed aromatic ring 12A, is shown in an upper part. Both of the condensed aromatic ring 12A and the graphene sheet 13A have the n-electron system, and thus a π-π interaction can be exhibited. Therefore, the carbon layer 12 including the condensed aromatic ring 12A and the graphene sheet material 13 including the graphene sheet 13A can exhibit excellent bonding.

In addition, the carbon layer 12 includes amorphous moieties or is smaller than the graphene sheet. The carbon layer 12, therefore, can bond to the active material particle 11 including the titanium-niobium composite oxide, which has uneven surfaces, by Van der Waals forces and hydrogen bonding between a hydroxyl group on the surface of the titanium-niobium composite oxide and the π-electron system.

As a result, the graphene sheet material 13 and the active material particle 11 can exhibit excellent bonding.

In the composite 10 shown in FIG. 1, the graphene sheet material 13 can function as an excellent conductive path. In addition, the presence of the carbon layer 12 allows the separation of the graphene sheet material 13 from the active material particle 11 to be prevented, even if there is a flow of the solvent or the ions of the electrolyte.

Next, each material that constitutes the composite according to the first embodiment will be explained in more detail.

### (1) Active Material Particle

The active material particle may be a primary particle or a secondary particle.

The active material particle includes a titanium-niobium composite oxide.

The titanium-niobium composite oxide may be an oxide represented by a general formula: LiₓTi_{1-y}M1_{y}Nb_{2-z}M2_{z}O₇. In the general formula described above, indexes x, y and z are preferably within a range of 0 ≤ x ≤ 5, 0 ≤ y < 1, and 0 ≤ z < 2, respectively. M1 is preferably at least one element selected from the group consisting of Zr, Si and Sn. M2 is preferably at least one element selected from the group consisting of V, Nb, Ta and Bi. Due to various factors such as oxygen deficiency during synthesis, the titanium-niobium composite oxide may have a composition beyond the composition of the general formula described above. For example, the titanium-niobium composite oxide may have a composition represented by a general formula: LiₓTi_{1-y}M1_{y}Nb_{2-z}M2_{z}O_{7±δ} wherein δ can be 0.3 or less.

The primary particles of the active material particles preferably have an average particle size of 10 nm to 100 µm. When the average particle size of the primary particles is 10 nm or more, they can be easily handled in terms of industrial production. When the average particle size of the primary particles is 100 µm or less, smooth diffusion of lithium ions within solids of the titanium-niobium composite oxide included in the active material particles is possible.

It is more preferable that the average particle size is 30 nm to 30 µm. When the average particle size is 30 nm or more, the particles can be easily handled in terms of the industrial production. When the average particle size is 30 µm or less, the mass and the thickness in a coating for manufacturing an electrode can be easily made uniform, and further, the surface smoothness is improved.

The active material particles preferably have a specific surface area of 0.5 m²/g to 50 m²/g. When the specific surface area is 0.5 m²/g or more, sites for absorption and desorption of lithium ions can be sufficiently secured. When the specific surface area is 50 m²/g or less, the particles can be easily handled in terms of industrial production. It is more preferable that the specific surface area is 3 m²/g to 30 m²/g.

### (2) Graphene Sheet Material

The graphene sheet material includes a planar graphene sheet of a monoatomic layer, or a laminate of 10 layers or less of the planar graphene sheets.

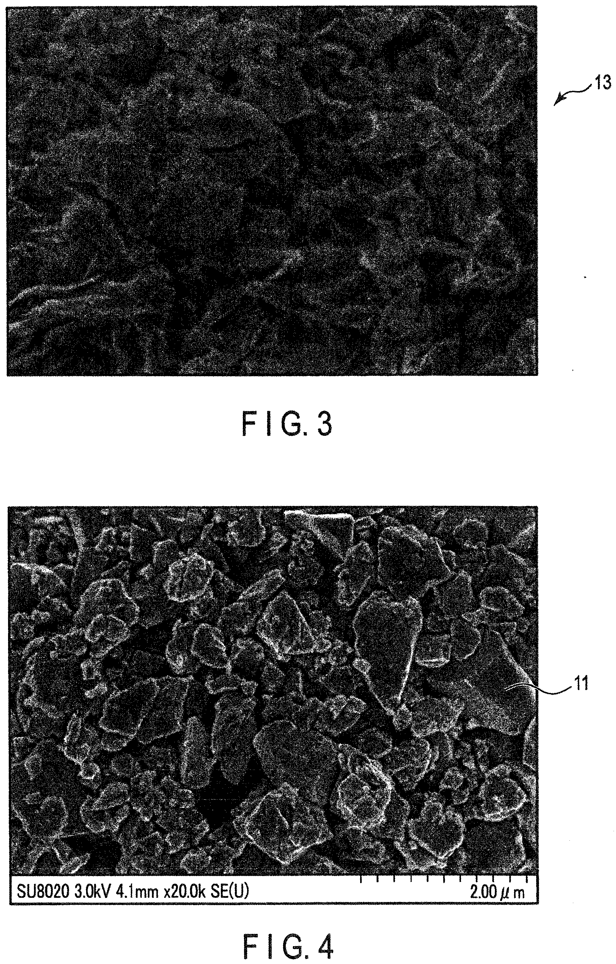

FIG. 3 shows a scanning electron microscope (SEM) photograph showing one example of the graphene sheets. As apparent from the SEM image in FIG. 3, when in an aggregate, the graphene sheets have a structure in which the sheets are bent. Here, the graphene sheet includes honeycomb structures of a planar condensate, in which 6-membered rings, that is, benzene rings are constituted by carbon atoms whose sp² hybrid orbital contributes to bonding with an adjacent atom.

The graphene sheet material includes the graphene sheet described above as a monolayer or a laminate. A proportion of active materials that contribute to charge and discharge in a composite including a laminate of more than 10 layers of the graphene sheets is low. A nonaqueous electrolyte battery using such a graphene sheet has reduced capacity. It is preferable that the graphene sheet material includes the graphene sheet of a monoatomic layer or a laminate of 2 to 3 layers of the graphene sheet. The graphene sheet material may be a mixture of laminates having a different number of layers from each other.

The graphene sheet may include a 5-membered ring or a 7-membered ring, in part. In addition, the graphene sheet may include a heteroatom such as oxygen, nitrogen, or phosphorus, in part. When oxygen or nitrogen is included, bonding between the graphene sheet and the titanium-niobium composite oxide can be further strengthened. When phosphorus is included, resistance to oxygen is strengthened, and thus the incombustibility is increased. The size of the graphene sheet is more than 50 nm ϕ and 100 µm ϕ or less. The graphene sheet having a diameter within the range described above can have more excellent conductivity, and can form more useful conductive paths. In addition, graphene sheets having a diameter within the range described above can be uniformly dispersed together with the active material particles. The size of the graphene sheet is more preferably a diameter of 200 nm ϕ to 10 µm ϕ. The size of the graphene sheet is even more preferably a diameter of 400 nm ϕ to 4 µm ϕ.

### (3) Carbon Layer

In order to exhibit the π-π interaction, the carbon layer including the carbon material having the π-electron system includes carbon atoms whose sp² hybrid orbital contributes to covalent bonding with an adjacent atom. It is preferable that the carbon material included in the carbon layer has a graphite structure. The carbon layer may also include carbon atoms whose sp³ hybrid orbital contributes to covalent bonding with an adjacent atom.

The carbon layer may also include an amorphous moiety. Accordingly, the carbon layer may include an amorphous carbon having a π-electron system. Further, the carbon layer may include a crystalline nanographite or nanographene structure included in the amorphous carbon structure. Alternately, the carbon layer may be graphene fragments having a diameter of 50 nm or less. The graphene fragment preferably has a diameter of 5 nm to 50 nm.

The thicker the thickness of the carbon layer, a repetition stability of the composite according to the first embodiment becomes more increased. In addition, the repetition stability becomes more increased by completely covering the surface of the active material particle. However, the higher the percentage of the carbon material included in the composite, the lower the capacity of the nonaqueous solvent battery including the composite. Additionally, the conductivity of the carbon layer is not as high as that of graphene, and thus an active material particle having a large amount of carbon layer has an increased electric resistance. Furthermore, when a large amount of carbon layer is included, there is a concern that the resistance to oxygen is reduced and ignitability is increased. For these reasons, the amount of the carbon layer included is preferably within a range of 0.01 to 5% by mass relative to the titanium-niobium composite oxide or the oxide of titanium. When the amount is within the range described above, excellent balance between the repetition stability and the capacity can be exhibited. The amount of inclusion of the carbon layer is more preferably 0.1 to 1% by mass.

### (4) Other Materials

In some cases, the composite according to the first embodiment may include carbonaceous substances such as acetylene black, carbon black, graphite, carbon nanotube, carbon nanofiber, and the like for aiding the graphene sheet material.

### [Confirmation Method]

Information regarding the composite according to the first embodiment can be confirmed by the following method.

### (Preparation of Measurement Sample)

A measurement sample, which is subjected to each analysis explained in detail below, can be prepared from a nonaqueous electrolyte battery by the following procedures.

First, the nonaqueous electrolyte battery is made to be in a discharged state. Then, the battery is disassembled in a glove box under an argon atmosphere. An electrode to be measured, for example a negative electrode, is taken out from the disassembled battery. The electrode, which has been taken out, is washed with methylethyl carbonate. The washed electrode is deactivated in water. After the electrode is dried, an electrode layer is separated therefrom. A composite including a negative electrode active material is extracted from the separated electrode layer using a centrifugal separator, or the like.

### (Method of separating Active Material Particles from Graphene Material)

The composite extracted as above is subjected to ultrasonication in water for about one hour. The graphene materials including the graphene sheet, which is hydrophobic and light, disperses to the water surface or disperses in the water, and thus the graphene sheet can be separated from the active material particles. According to the separation treatment described above, although most of the carbon layers bonded to surfaces of the active material particles and including the carbon material having the π-electron system do not separate from but remain on the active material particles, a portion thereof disperses in water. The carbon materials and the graphene sheets dispersed in water can be separated using centrifugation with different numbers of revolutions.

### (Method of Quantifying Total Carbon Amount)

The total amount of carbon atoms included in the composite can be quantified according to a high frequency heating-infrared absorbing method.

For example, the quantification can be performed as follows. First, the active material particles, separated from the graphene material as described above, are dried at 150°C for 12 hours. Then, the dried sample is measured into a container. The measured sample is introduced into a measuring apparatus (for example, CS-444LS manufactured by LECO Inc.), and measurement is performed. Thus, the total carbon amount can be quantified.

### (Method of Confirming State of Existence of Carbon Layer)

The state in which the carbon layer exists can be judged by a line analysis, carbon mapping, or the like using an electron probe micro analyzer (EPMA) of the surface or the cross-section of the composite. It is also possible to confirm the state by detecting a C1S peak using X-ray photoelectron spectroscopy. In addition, a cross-section of the graphene material can be observed using a high-resolution transmission electron microscope (TEM), whereby an amorphous part and a nanographene structure can be identified, also.

### (Observation of Graphene Material Shape)

It is possible to observe a state of a thin fragment of the graphene sheet included in the graphene material using a scanning electron microscope (SEM), as shown in, for example, FIG. 3.

### (Method of Confirming Carbon Bond)

The carbon bonding between the graphene sheet material and the carbon layer can be identified from micro-Raman spectra. In particular, the graphene structure can be confirmed by existence of a G-peak and D-peak based on graphene, and sizes of the defect and the graphene domain can be obtained from a ratio of the G-peak and the D-peak.

### (Observation of Active Material Particle Shape)

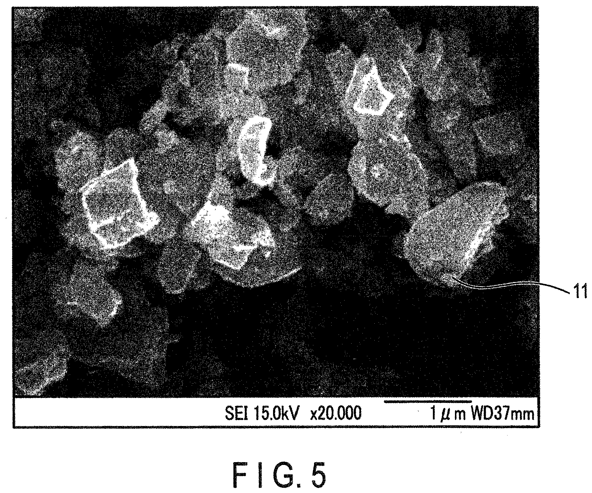

The active material particles can be observed by using SEM regardless of whether they are covered by a carbon layer or not. When the active material particle is covered with the carbon layer, the charge-up occurs with difficulty during SEM measurement, and thus such a particle appears as a dark particle on the SEM image. FIG. 4 shows an SEM image of a titanium-niobium oxide particle whose surface is covered with the carbon layer. On the other hand, FIG. 5 is an SEM image showing a titanium-niobium oxide particle whose surface is not covered with the carbon layer. Comparing FIG. 4 with FIG. 5, the titanium-niobium oxide particles in FIG. 4 appear as a brighter image than those in FIG. 5, but it is found that the particles have the same shape as those in FIG. 5.

### (Composition Analysis of Active Material)

The composition of the active material included in the active material particle can be analyzed by inductively coupled plasma atomic emission spectroscopy (ICP-AES).

### (Method of Measuring Average Particle Size of Secondary Particle of Active Material Particle)

A method for measuring an average particle size of a secondary particle of an active material particle is as follows. As a measuring device, a particle distribution analyzing device using a laser diffraction method (Shimadzu SALD-300) is used. First, about 0.1 g of a sample, a surfactant, and 1 to 2 mL of distilled water are added to a beaker, and the mixture is thoroughly stirred. The thus obtained mixed solution is injected into a water tank being stirred, and a sample solution is prepared here. Using the sample solution, a luminous intensity distribution is measured 64 times at intervals of 2 seconds, and then the particle size distribution data is analyzed.

### (Method of Confirming Average Particle Size of Primary Particles of Active Material Particles)

The average primary particle size of the active material particles can be confirmed by observation with a scanning electron microscope (SEM). An average particle size of 10 typical particles, extracted from a typical visual field, is obtained to determine the average primary particle size.

### (Method of Measuring Specific Surface Area of Active Material Particle)

As the measurement of a specific surface area of the active material particle, a method can be used in which a molecule of a known area of adsorption occupancy is adsorbed on the powder particle surface at a temperature of liquid nitrogen, and a specific surface area of the sample is obtained from the absorption amount. A BET method utilizing a physical adsorption of inert gas at a low temperature under a low humidity is most often utilized. The BET theory, which extends a Langmuir theory, which is a monomolecular layer adsorption theory, to a multi-molecular layer adsorption, is the most famous theory as a calculation method of a specific surface area. The specific surface area obtained from this theory is referred to as a BET specific surface area.

According to the first embodiment as explained above, the composite including the plurality of the active material particles, the graphene material, and the graphene layer is provided. In the composite according to the first embodiment, excellent bonding between the plurality of the active material particles and the graphene material can be exhibited, due to an existence of the carbon layer located in between. As a result, by using the composite according to the first embodiment, a nonaqueous electrolyte battery that can exhibit excellent capacity retention can be realized.

The composite according to the first embodiment may be used in a negative electrode or a positive electrode of a nonaqueous electrolyte battery. In either case, the nonaqueous electrolyte battery using the composite according to the first embodiment can exhibit excellent capacity retention.

When the composite according to the first embodiment is used in the positive electrode, as an active material of the negative electrode, for example, metal lithium or lithium alloy, or carbon materials such as graphite and coke may be used.

### (SECOND EMBODIMENT)

According to a second embodiment, there is provided a method of manufacturing a composite. The method includes: preparing a plurality of active material particles; preparing an organic compound; preparing a graphene sheet starting material; adding the plurality of the active material particles, the organic compound and the graphene sheet starting material into water to prepare a dispersion solution; adjusting a pH of the dispersion solution to less than 2.5; removing water from the dispersion solution to obtain a solid mixture; and heating the solid mixture in an inert atmosphere. The active material particle includes a titanium-niobium composite oxide. The organic compound has a plurality of hydroxyl groups. The graphene sheet starting material includes a monoatomic layer of a planar graphene oxide sheet, or a laminate of 10 or less layers of the planar graphene oxide sheet.

A method for manufacturing the composite according to a second embodiment will be explained below.

### [Preparation of Active Material Particle]

First, a plurality of active material particles including a titanium-niobium composite oxide is prepared.

For example, the plurality of the active material particles including a titanium-niobium composite oxide can be prepared by the following procedures.

First, starting materials are mixed. As the starting material, an oxide such as titanium dioxide or niobium pentoxide may be used. Alternatively, a salt including titanium or niobium may be used as the starting material. As the salt used as the starting material, salts capable of decomposing at a comparatively low temperature to form an oxide, such as hydroxide salts, carbonates and nitrates, are preferable. For example, niobium hydroxide, or the like is appropriate.

Next, the mixture, obtained by mixing the starting materials, is pulverized to obtain a mixture that is as uniform as possible. Then, the obtained mixture is sintered. The sintering can be performed at a temperature range of 900 to 1400°C for a total of 1 to 100 hours. The titanium-niobium composite oxide can be obtained in the steps described above.

The titanium-niobium composite oxide obtained by the above steps can be represented, for example, by a general formula: LiₓTi_{1-y}M1_{y}Nb_{2-z}M2_{z}O₇. Here, M1 is at least one element selected from the group consisting of Zr, Si and Sn. M2 is at least one element selected from the group consisting of V, Nb, Ta and Bi.

Here, the element M1 and the element M2 may be included in the titanium-niobium composite oxide, for example, by including them in the starting materials. The values of y and z can be within ranges of 0 ≤ y < 1 and 0 ≤ z < 2, respectively.

The index x can be controlled by including a compound that includes Li in the starting material. The index x can be within a range of 0 ≤ x ≤ 5.

### [Preparation of Organic Compound Having a Plurality of Hydroxyl Groups]

Separately, an organic compound having a plurality of hydroxyl groups is prepared.

The organic compound having the plurality of hydroxyl groups include, for example, various saccharides. For example, disaccharides such as sucrose, lactose, maltose, trehalose, kojibiose, nigerose, sophorose, laminaribiose, and cellobiose; monosaccharides such as glucose, fructose, allose, ribose, and apiose; oligosaccharides; glycerin; sorbitol; and polysaccharides can be cited. Of these, disaccharides such as sucrose, lactose, or maltose is particularly preferable.

In particular, by further mixing sucrose and, for example, dispersing the sucrose in water, a more uniform mixture can be prepared. Sucrose, which is neutral, can cross-link with hydrogen bonds to exert an effect that can be described as that of glue, and as a result, the uniform mixture can be prepared. Such an effect is not limited in water, and can be similarly exhibited in a solid phase. Specifically, by heating a mixture including sucrose in a solid phase, the sucrose melts, and as a result, the uniform mixture can be provided by the effect of the hydrogen bonds.

When the organic compound having the plurality of the hydroxyl group, listed above, is heated, the carbon layer including the carbon material having the π-electron system can be formed. The carbon material is one kind of amorphous carbon that is referred to as hard carbon.

### [Manufacture of Graphene Sheet Starting Material]

Separately, the graphene starting material including the monoatomic layer planar graphene oxide sheet or the laminate of 10 layers or less of the planar graphene oxide sheets is manufactured.

The oxidized planar graphene sheet can be manufactured, for example, by the following method.

First, a mixed solution of concentrated sulfuric acid and sodium nitrate is cooled to adjust the temperature thereof to about 5°C. To the mixed solution adjusted to a temperature of about 5°C, graphite powder is gradually added. Next, potassium permanganate powder is gradually added to the mixed liquid, while the mixed liquid is cooled. Due to addition of the potassium permanganate powder, the temperature of the mixed solution elevates to about 10°C.

Next, the mixed solution is stirred at room temperature for about 4 hours. After the solution is stirred, water is added gradually to the solution, and the resulting mixture is heated under reflux for 30 minutes. After that, the mixed solution is cooled to room temperature. After the mixed solution is cooled, an aqueous hydrogen peroxide solution is added dropwise to the mixed solution. The thus obtained reaction mixture is centrifuged to recover a precipitate.

The recovered precipitate is washed with dilute hydrochloric acid several times. After washing, the precipitate is further centrifuged. After the centrifugation, the precipitate is subjected to drying by heating at 80°C under vacuum. Thus, the oxidized planar graphene sheet is obtained.

A size, number of layers, a degree of oxidation of the obtained planar graphene oxide sheet can be controlled by appropriately changing the graphite, which is the starting material, or the reaction conditions. According to the method described above, therefore, the planar graphene oxide sheet of a monoatomic layer can be manufactured, or the laminate of 10 layers or more of the planar graphene oxide sheets can be manufactured.

### [Preparation of Dispersion solution and Adjustment of pH]

Next, the materials prepared as described above, are added into water, and they are thoroughly mixed to prepare a dispersion solution. Whereupon, the preparation is characterized in that the pH of the dispersion solution is adjusted to less than 2.5. The water may include an alcohol, or the like, if necessary.

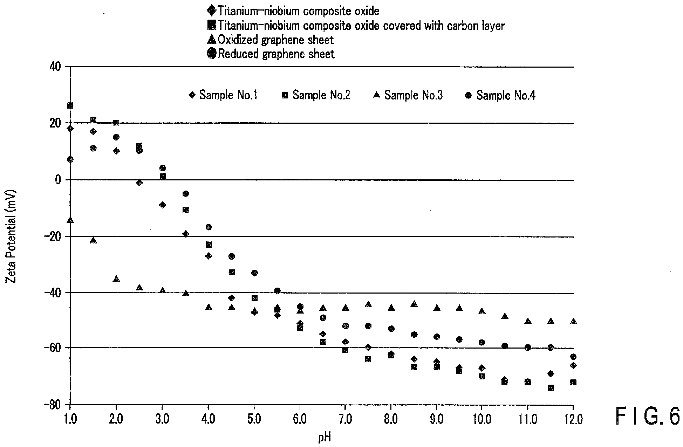

FIG. 6 is a graph showing zeta potentials of each of the titanium-niobium composite oxide, the titanium-niobium composite oxide covered with the carbon layer, the oxidized graphene sheet, and the reduced graphene sheet. FIG. 6 shows data obtained for the first time through actual experiments conducted by the present inventors.

As apparent from the graph of FIG. 6, both the planar graphene oxide sheet and the titanium-niobium composite oxide become negatively charged under conditions in which the pH is in a weakly acidic to neutral and alkaline range. Accordingly, under conditions in which the pH is weakly acid to neutral and alkaline, the planar graphene oxide sheet and the titanium-niobium composite oxide repel each other.

On the other hand, under conditions in which the pH is in an acidic range, in particular less than 2.5, the planar graphene oxide sheet becomes negatively charged but the titanium-niobium composite oxide particle becomes positively charged. Accordingly, the planar graphene oxide sheet and the titanium-niobium composite oxide attract each other in the dispersion solution whose pH is in an acidic range, in particular less than 2.5.

As apparent from the graph of FIG. 6, the reduced planar graphene sheet becomes positively charged even under conditions in which the pH range of the dispersion solution is less than 2.5. Therefore, even if the pH of the dispersion solution is adjusted to less than 2.5, it is difficult to have the reduced planar graphene sheet and the titanium-niobium composite oxide particle attract to each other.

In addition, as apparent from the graph of FIG. 6, even if the active material particles include the carbon-covered titanium-niobium composite oxide, the active material particles become positively charged under conditions in which the pH range of the dispersion solution is less than 2.5. Therefore, inclusion of the carbon-covered titanium-niobium composite oxide in the active material particles can be tolerated. Rather, it is preferable for the active material particles to include the titanium-niobium composite oxide covered with the carbon material having the n-electron system, because π-π interaction with the graphene sheet can be utilized.

The organic compound having the plurality of hydroxyl groups included in the dispersion solution can exert the effect that can be described as that of glue, in which the organic compound cross-links the titanium-niobium composite oxide particle to the planar graphene oxide sheet. The organic compound having plurality of the hydroxyl groups can exert the same effect not only in water, but also in a solid phase.

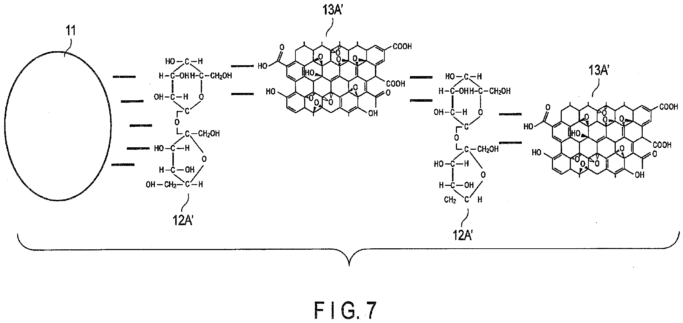

FIG. 7 is a schematic view showing interactions among the active material particles, the graphene oxide sheet, and sucrose, which shows one example of the effect of glue, as described above, exerted by the organic compound having the plurality of hydroxyl groups.

Sucrose 12A' has a plurality of hydroxyl groups. A titanium-niobium composite oxide included in an active material particle 11 has hydroxyl groups on its surface. The hydroxyl groups can exhibit hydrogen bonding with each other, and thus the sucrose 12A' and the active material particle 11 can exhibit strong bonding with each other through hydrogen bonding. In addition, graphene oxide sheet 13A' has hydroxyl groups on its surface. The hydroxyl groups can exhibit covalent bonding with hydroxyl groups on the sucrose 12A'. Accordingly, the graphene oxide sheet 13A' and the sucrose 12A', can exhibit strong bonding with each other through hydrogen bonding. Due to the above reasons, the sucrose 12A' can exert the excellent effect of glue. Additionally, sucrose 12A' melts when it is heated, and the melted sucrose can also exert the effect of glue from hydrogen bonding, and thus can provide a uniform mixture.

### [Acquisition of Solid Mixture and Heating]

Subsequently, water is removed from the thus prepared dispersion solution, for example, by evaporating or freeze-drying, and the resulting product is dried to solidify it, whereby a solid mixture can be obtained.

Subsequently, the solid mixture is pulverized, if necessary, to obtain a powder. Next, the solid mixture or powder is heated under an inert atmosphere, for example, under a stream of inert gas. The heating temperature is, for example, from 700°C to 1000°C. After the heating, the resulting product may be pulverized to obtain a powder.

By this heating, the organic compound having the plurality of hydroxyl groups can be converted into the carbon layer including the carbon material having the n-electron system. The carbon layer may be located between the active material particle and the graphene sheet material having the planar graphene sheets.

According to the method for manufacturing the composite, as explained above, the composite according to the first embodiment can be obtained. According to the method of the second embodiment for manufacturing the composite, therefore, the composite that allows the realization of the nonaqueous electrolyte battery that can exhibit excellent capacity retention can be manufactured.

### (THIRD EMBODIMENT)

According to a third embodiment, there is provided a nonaqueous electrolyte battery active material. The active material includes the composite according to the first embodiment.

As stated in the explanation of the first embodiment, the composite according to the first embodiment may be used in the negative electrode or the positive electrode of the nonaqueous electrolyte battery.

When the nonaqueous electrolyte battery active material according to the third embodiment is used as the negative electrode active material, the composite according to the first embodiment may be included alone, or another active material may be further included, the other active material being different from the active material included in the active material particles of the composite according to the first embodiment. The other active material described above may include, for example, lithium-titanium composite oxides having a spinel structure (Li₄Ti₅O₁₂, and the like) ; oxides of titanium having an anatase structure, a rutile structure, or a monoclinic β-type structure (a-TiO₂, r-TiO₂, TiO₂(B), and the like); and iron composite sulfides (FeS, FeS₂, and the like).

The nonaqueous electrolyte battery active material according to the third embodiment includes the composite according to the first embodiment. As a result, the nonaqueous electrolyte battery active material according to the third embodiment can allow the nonaqueous electrolyte battery capable of exhibiting excellent capacity retention to be realized.

### (FOURTH EMBODIMENT)

According to a fourth embodiment, there is provided a nonaqueous electrolyte battery. The nonaqueous electrolyte battery includes a positive electrode, a negative electrode and a nonaqueous electrolyte. The negative electrode includes the active material according to the third embodiment.

The negative electrode may include a negative electrode current collector, and a negative electrode layer(s) formed on both surfaces or one surface thereof. The nonaqueous electrolyte battery active material according to the third embodiment may be included in the negative electrode layer as the negative electrode active material. The negative electrode may further include a negative electrode tab. For example, a portion of the negative electrode current collector, whose surface does not have the negative electrode layer applied thereto, can function as the negative electrode tab. Alternatively, the negative electrode may include a negative electrode tab that is a separate entity from the negative electrode current collector, which is electrically connected to the negative electrode current collector.

The positive electrode may include a positive electrode current collector, and a positive electrode layer (s) formed on both surfaces or one surface thereof. The positive electrode layer may include a positive electrode active material. The positive electrode may further include a positive electrode tab. For example, a portion of the positive electrode current collector, whose surface does not have the positive electrode layer applied thereto, can function as the positive electrode tab. Alternatively, the positive electrode may include a negative electrode tab that is a separate entity from the positive electrode current collector, which is electrically connected to the positive electrode current collector.

The contact between the negative electrode layer and the positive electrode layer can be prevented, for example, by sandwiching a separator in between.

The negative electrode, the positive electrode, and, for example, the separator can form an electrode group. The form of the electrode group is not particularly limited. The electrode group may have, for example, a stacked structure. In the stacked structure, a plurality of negative electrodes and a plurality of positive electrodes are stacked in a state in which the negative electrode layer is separated from the positive electrode layer. Alternatively, the electrode group may have a wound structure. The wound structure is a structure formed by winding a laminate around a winding axis, the laminate being obtained by laminating one or more positive electrodes and one or more negative electrodes while preventing contact between the positive electrode layer and the negative electrode layer.

The nonaqueous electrolyte battery according to the fourth embodiment may further include a container. The electrode group and the nonaqueous electrolyte may be housed in the container.

The nonaqueous electrolyte battery according to the fourth embodiment may further include a positive electrode terminal and a negative electrode terminal. The positive electrode terminal may be electrically connected to the positive electrode. The negative electrode terminal may be electrically connected to the negative electrode.

The nonaqueous electrolyte battery according to the fourth embodiment may include as a charge carrier, for example, lithium ions, sodium ions, or magnesium ions.

Next, each comprising member of the nonaqueous electrolyte battery according to the fourth embodiment will be explained in detail.

### 1) Container

The form of the container is selected depending on the use of the battery, and may be selected from, for example, a flat form (thin form), a rectangular form, a cylindrical form, a coin form, and a button form. Examples of the container include, depending on the battery size, for example, containers for a small battery loaded on a portable electronic equipment, containers for a large battery loaded on two- to four-wheeled vehicles, and the like.

The container may be formed from, for example, a laminate film having a thickness of 0.5 mm or less. Alternatively, a metal container having a thickness of 1.0 mm or less may also be used as the container. It is more preferable that the metal container has a thickness of 0.5 mm or less.

As the laminate film, a multi-layer film in which a metal layer mediates between resin layers is used. An aluminum foil or an aluminum alloy foil is preferable as the metal layer to reduce weight. As the resin layer, for example, a polymeric material such as polypropylene (PP), polyethylene (PE), nylon, polyethylene terephthalate (PET) may be used. The laminate film can be molded into the shape of the container by thermally sealing the laminate film.

The metal container may be made from, for example, aluminum, aluminum alloy, or the like. As the aluminum alloy, an alloy including an element such as Mg, Zn, or Si is preferable. When a transition metal such as Fe, Cu, Ni, or Cr is included in the alloy, the content of the transition metal is preferably adjusted to 100 ppm or less by mass.

### 2) Negative Electrode

The negative electrode layer may further include a binder, in addition to the nonaqueous electrolyte battery active material according to the third embodiment.

The binder acts to bind the negative electrode layer to the current collector. Examples of the binder may include polytetrafluoroethylene (PTFE), polyvinylidene fluoride (PVdF), fluororubber, and styrene-butadiene rubber.

In addition to the graphene material according to the first embodiment, the carbon layer and the optional carbon material, the negative electrode layer may include an additional conductive agent. Examples of the additional conductive agent include carbon nanotube and carbon fiber.

It is preferable that the active material, the conductive agent, and the binder are blended in the negative electrode layer at contents of 70% to 96% by mass, 2% to 28% by mass, and 2% to 28% by mass, respectively. Here, the content of the conductive agent includes masses of the graphene material, carbon layer, and optional carbon material according to the first embodiment. By adjusting the content of the conductive agent to 2% by mass or more, the current collection performance in the negative electrode layer can be improved, and thereby, the large current characteristic of the nonaqueous electrolyte battery can be improved. By adjusting the content of the binder to 2% by mass or more, the binding property between the negative electrode layer and the current collector is increased, and thus the cycle characteristic can be further improved. On the other hand, it is preferable to adjust each of the contents of the conductive agent and the binder to 28% by mass or less to achieve increased capacity.

It is preferable that the current collector is electrically stable at a potential range higher than 1 V (vs. Li/Li⁺). The current collector is preferably an aluminum foil, or an aluminum alloy foil including an element such as Mg, Ti, Zn, Mn, Fe, Cu, or Si.

The negative electrode is manufactured, for example, by dispersing the active material, the binder, and the optional conductive agent in a commonly used solvent to prepare a slurry, applying the resultant slurry to the current collector to obtain a coating of applied slurry, drying the coating, and then applying a press to the dried coating. When applying the slurry, by providing a portion on the current collector where the slurry is not applied, a part of the current collector may be used as the negative electrode tab. The negative electrode may also be manufactured by forming the active material, the binder, and the optional conductive agent into pellets, and forming the pellets, as the negative electrode layer, onto the current collector.

### 3) Positive Electrode

The positive electrode layer may include, for example, a positive electrode active material, a conductive agent, and a binder.

As the positive electrode active material, for example, oxides and polymers may be used.

The oxide, which may be used as the positive electrode active material, may include, for example, manganese dioxide (MnO₂), iron oxide, copper oxide and nickel oxide, which has absorbed lithium, lithium-manganese composite oxides (such as LiₓMn₂O₄, and LiₓMnO₂), lithium-nickel composite oxides (such as LiₓNiO₂), lithium-cobalt composite oxides (LiₓCoO₂), lithium-nickel-cobalt composite oxides (such as LiNi_{1-y}Co_{y}O₂), lithium-manganese-cobalt composite oxides (such as LiₓMn_{y}Co_{1-y}O₂), lithium-manganese-nickel composite oxides having a spinel structure (LiₓMn_{2-y}Ni_{y}O₄), lithium-phosphorus oxide having an olivine structure (such as LiₓFePO₄, LiₓFe_{1-y}Mn_{y}PO₄, and LiₓCoPO₄), iron sulfate (Fe₂(SO₄)₃), and vanadium oxide (such as V₂O₅). It is preferable that x and y, described above, are within a range of 0 < x ≤ 1 and 0 ≤ y ≤ 1.

The polymer, which may be used as the positive electrode active material, may include, for example, conductive polymer materials such as polyaniline and polypyrrole, and disulfide polymer materials. Sulfur (S) and fluorocarbon may also be used as the positive electrode active material.

Examples of the preferable active material include lithium-manganese composite oxide (LiₓMn₂O₄), lithium-nickel composite oxide (LiₓNiO₂), lithium-cobalt composite oxide (LiₓCoO₂), lithium-nickel-cobalt composite oxide (LiₓNi_{1-y}Co_{y}O₂), lithium-manganese-nickel composite oxide having a spinel structure (LiₓMn_{2-y}Ni_{y}O₄), lithium-manganese-cobalt composite oxide (LiₓMn_{y}Co_{1-y}O₂), and lithium iron phosphate (LiₓFePO₄), which can exhibit a high positive electrode voltage. It is preferable that x and y, described above, are within a range of 0 < x ≤ 1 and 0 ≤ y ≤ 1.

The more preferable positive electrode active materials are lithium-cobalt-composite oxides and lithium-manganese composite oxides. Since these active materials have a high ion conductivity, when used in combination with the above described negative electrode active material, it becomes unlikely for the diffusion of lithium ions in the positive electrode active material to be rate limiting.

The conductive agent enhances the current collection performance of the active material, and suppresses the contact resistance between the active material and the current collector. Examples of the conductive agent include carbonaceous substances such as acetylene black, carbon black, graphite, graphene, and carbon nanotube.

The binder binds the active material to the conductive agent. Examples of the binder include polytetrafluoroethylene (PTFE), polyvinylidene fluoride (PVdF), and fluororubber.

It is preferable that the active material, the conductive agent, and the binder are blended in the positive electrode layer at contents of 80% to 95% by mass, 3% to 18% by mass, and 2% to 17% by mass, respectively. When the content of the conductive agent is adjusted to 3% by mass or more, the effects described above can be sufficiently exhibited. When the content of the conductive agent is adjusted to 18% by mass or less, the decomposition of the nonaqueous electrolyte on the surface of the conductive agent during storage under high temperature can be reduced. When the content of the binder is adjusted to 2% by mass or more, sufficient positive electrode strength can be obtained. When the content of the binder is adjusted to 17% by mass or less, the blending amount of the binder, which is an insulating material in the positive electrode, can be reduced, thus internal resistance can be reduced.

The current collector is preferably, for example, an aluminum foil, or an aluminum alloy foil including an element such as Mg, Ti, Zn, Mn, Fe, Cu, or Si.

The positive electrode is manufactured, for example, by dispersing the active material, the conductive agent, and the binder in a commonly used solvent to prepare a slurry, applying the resulting slurry to the current collector to obtain a coating of applied slurry, drying the coating, and then applying a press to the dried coating. When applying the slurry, by providing a portion on the current collector where the slurry is not applied, a part of the current collector may be used as the positive electrode tab. Alternatively, the positive electrode may also be manufactured by forming the active material, the conductive agent, and the binder into pellets, and forming the pellets, as the positive electrode layer, onto the current collector.

### 4) Nonaqueous Electrolyte

As the nonaqueous electrolyte, for example, a liquid nonaqueous electrolyte, prepared by dissolving an electrolyte in an organic solvent, or a gel-form nonaqueous electrolyte constituted of the liquid electrolyte and a polymeric material may be used.

The liquid nonaqueous electrolyte in which the electrolyte is dissolved in an organic solvent at a concentration of 0.5 M to 2.5 M is preferable.

Examples of the electrolyte include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), lithium bistrifluoromethylsulfonylimide [LiN(CF₃SO₂)₂], and mixtures thereof. It is preferable that, even at a high potential, the electrolyte does not easily oxidize, and LiPF₆ is the most preferable.

Examples of the organic solvent include cyclic carbonates such as propylene carbonate (PC), ethylene carbonate (EC), and vinylene carbonate; linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2MeTHF), dioxolane (DOX); linear ethers such as dimethoxyethane (DME) and diethoxyethane (DEE); γ-butyrolactone (GBL), acetonitrile (AN), and sulfolane (SL). These organic solvents may be used alone or as a mixed solvent.

Examples of the polymeric material include polyvinylidene fluoride (PVdF), polyacrylonitrile (PAN), and polyethylene oxide (PEO).

The preferable organic solvent is a mixed solvent obtained by mixing at least two solvents selected from the group consisting of propylene carbonate (PC), ethylene carbonate (EC), and diethyl carbonate (DEC), or a mixed solvent including γ-butyrolactone (GBL). By using a mixed solvent as such, a nonaqueous electrolyte battery having excellent high temperature characteristics can be obtained.

Needless to say, when ions other than lithium ion are used as the charge carrier, nonaqueous electrolytes which correspond to the ions functioning as the charge carrier may be used.

### 5) Separator

As the separator, for example, a porous film or a non-woven fabric made of synthetic resin, which include polyethylene, polypropylene, cellulose, or polyvinylidene fluoride (PVdF), may be used. The porous film is preferably formed from polyethylene or polypropylene. The porous film described above is capable of melting at a given temperature to cut off current, and thus can improve safety.

### 6) Positive Electrode Terminal and Negative Electrode Terminal

As a material for the positive electrode terminal, for example, a material having electrical stability and conductivity in an electric potential range of 3 to 4.25 V vs. Li/Li⁺ can be used. Specific examples thereof include aluminum, and aluminum alloy including an element such as Mg, Ti, Zn, Mn, Fe, Cu, or Si. In order to reduce contact resistance between the positive electrode terminal and the positive electrode current collector, the positive electrode terminal is preferably made of the same material as the positive electrode current collector.

As a material for the negative electrode terminal, for example, a material having electrical stability and conductivity in an electric potential range of 1 V to 3 V vs. Li/Li⁺ can be used. Specific examples thereof include aluminum, and aluminum alloy including an element such as Mg, Ti, Zn, Mn, Fe, Cu, or Si. In order to reduce the contact resistance between the negative electrode terminal and the negative electrode current collector, the negative electrode terminal is preferably made of the same material as the negative electrode current collector.

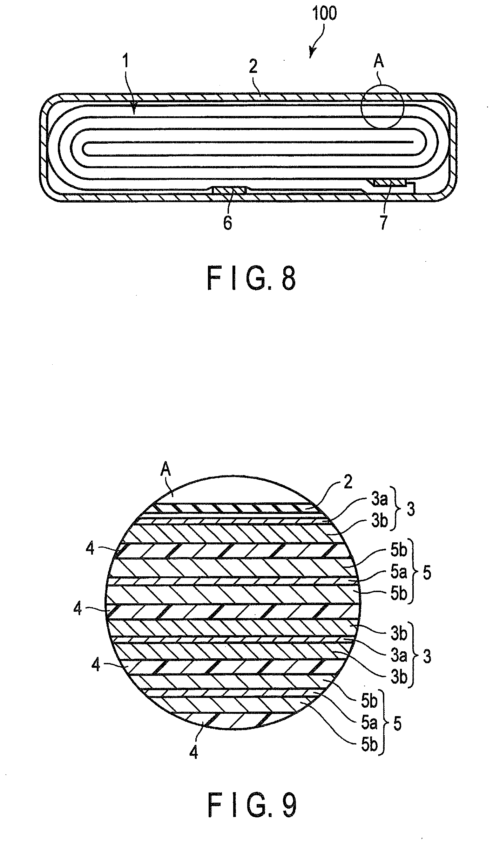

Next, one example of the nonaqueous electrolyte battery according to the fourth embodiment will be explained in detail, referring to FIG. 8 and FIG. 9.

FIG. 8 is cross-sectional view showing a flat nonaqueous electrolyte battery whose container is formed of a laminate film. FIG. 9 is an enlarged cross-sectional view of part A in FIG. 8. Each drawing is a typical view for description. Though there are parts different from an actual battery in shape, dimension, and ratio, these structural designs may be properly changed taking the following explanations and known technologies into consideration.

The nonaqueous electrolyte battery 100, shown in FIG. 8 and FIG. 9, includes a flat, wound electrode group 1, a bag-like container 2, and nonaqueous electrolyte, which is not shown. The flat, wound electrode group 1 is housed in the bag-like container 2. The nonaqueous electrolyte is also housed in the bag-like container 2, and a portion thereof is sustained in the wound electrode group 1.

The flat, wound electrode group 1 is formed by spirally winding a laminate, in which a negative electrode 3, a separator 4, a positive electrode 5, and the separator 4 are laminated in this order from the outside, and performing press-molding of the wound laminate.

As shown in FIG. 9, the outermost negative electrode 3 has a structure in which a negative electrode layer 3b is formed on one inner surface of the negative electrode current collector 3a. The other negative electrodes 3 have a structure in which the negative electrode layers 3b are formed on both surfaces of the negative electrode current collector 3a. The positive electrode 5 has a structure in which the positive electrode layers 5b are formed on both surfaces of the positive electrode current collector 5a.

As shown in FIG. 9, in the vicinity of the periphery of the wound electrode group 1, a negative electrode terminal 6 is electrically connected to the negative electrode current collector 3a in the outermost negative electrode 3, and a positive electrode terminal 7 is electrically connected to a positive electrode current collector 5a in the positive electrode 5 located on the inside. The negative electrode terminal 6 and the positive electrode terminal 7 extend outward from an opening in the bag-like container 2.

The nonaqueous electrolyte battery 100 shown in FIG. 8 and FIG. 9 can be manufactured, for example, by the method described below. First, the wound electrode group 1, which is electrically connected to the negative electrode terminal 6 and the positive electrode terminal 7, is housed in the container 2 having an opening. Whereupon, a part of each of the negative electrode terminal 6 and the positive electrode terminal 7 are made to extend out of the container 2. Subsequently, heat-sealing is performed in a state in which the negative electrode terminal 6 and the positive electrode terminal 7 are sandwiched by the container 2 at the opening, and a part of the opening of the container 2 is left unsealed. Next, liquid nonaqueous electrolyte is injected into the container 2 through the part where the container 2 is had not been sealed. Thereafter, the part of the container 2 through which the nonaqueous electrolyte had been injected is sealed, whereby the wound electrode group 1 and the liquid nonaqueous electrolyte can be completely sealed in the bag-like container 2.

The nonaqueous electrolyte battery according to the fourth embodiment includes the active material according to the third embodiment, and thus it can exhibit excellent capacity retention.

### [Examples]

### (Example 1)

In Example 1, a test electrode of Example 1 is manufactured by the following procedures.

### [Synthesis of Active Material Particle]

A titanium dioxide (TiO₂) powder having an anatase structure and a niobium pentoxide (Nb₂O₅) powder are prepared as starting materials. TiO₂ and Nb₂O₅ are mixed in a ratio of 1:3.3 by mass to obtain a mixture. The thus obtained mixture is sintered at 1100°C for 24 hours. After sintering, the product is pulverized to obtain a product powder.

Next, a portion of the product powder is subjected to an analysis according to a wide-angle X-ray diffraction method explained below.

### <Wide-Angle X-Ray Diffraction Method>

A portion of the product powder is packed into a standard glass holder having a diameter of 25 mm, and measurement is performed according to the wide-angle X-ray diffraction method. An apparatus and conditions used in the measurement are shown below.
(1) X-ray generator manufactured by Rigaku Corporation RU-200R (rotating anticathode)
   X-ray source: CuKα rays
   A curved crystal monochromator (graphite) is used.
   Output: 50 kV, 200 mA
(2) Goniometer manufactured by Rigaku Corporation 2155S2 model
   Slit system: 1°-1°-0.15 mm-0.45 mm
   Detector: Scintillation counter
(3) Count recording device manufactured by Rigaku Corporation RINT 1400 model
(4) Scanning method 2θ/θ continuous scanning
(5) Qualitative analysis
   Measurement range (2θ) 5 to 100°
   Scanning speed 2°/minute
   Step width (2θ) 0.02°

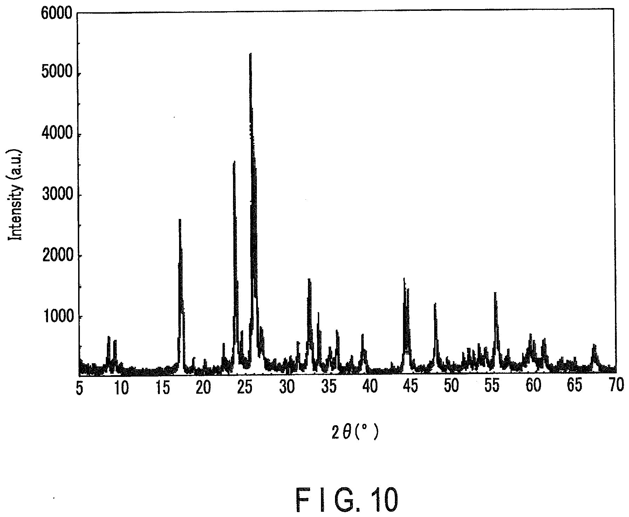

As a result, an X-ray diffraction pattern, shown in FIG. 10, is obtained. From the diffraction pattern, it can be confirmed that the obtained product has the same crystal structure as that of a monoclinic titanium-niobium composite oxide, represented by a compositional formula TiNb₂O₇, attributed to JCPDS (Joint Committee on Powder Diffraction Standards): #39-1407.

A portion of the obtained product is subjected to an ICP-AES analysis. From the results thereof and the results of the X-ray analysis, it is found that the obtained product powder is a monoclinic titanium-niobium composite oxide represented by a compositional formula TiNb₂O₇.

### <BET Specific Surface Area>

A BET specific surface area of the obtained product is measured. The obtained product has a BET specific surface area of 0.2 m²/g.

### [Synthesis of Graphene Sheet Starting Material]

First, a mixed solution of concentrated sulfuric acid and sodium nitrate is cooled to adjust the temperature thereof to about 5°C. To the mixed solution adjusted to a temperature of 5°C, 5 g of graphite powder (Z-5F manufactured by Ito Graphite Co., Ltd.) is gradually added. Next, 15 g of potassium permanganate powder is added gradually to the mixed liquid, while the mixed liquid is cooled. Due to addition of the potassium permanganate powder, the temperature of the mixed solution is elevated to about 10°C.

Next, the mixed solution is stirred at room temperature for about 4 hours. After the solution is stirred, water is added gradually to the solution, and the resulting mixture is heated under reflux for 30 minutes. After that, the mixed solution is cooled to room temperature. After the mixed solution is cooled, 450 ml of a 2% aqueous hydrogen peroxide solution is added dropwise to the mixed solution. The thus obtained reaction mixture is centrifuged to recover a precipitate.

The recovered precipitate is washed with dilute hydrochloric acid three times. After washing, the precipitate is further centrifuged. After the centrifugation, the precipitate is subjected to drying by heating at 80°C under vacuum. Thus, the graphene sheet starting material including the oxidized planar graphene sheet is obtained.

A portion of the obtained graphene sheet starting material is analyzed according to the method explained above. The graphene sheet starting material includes laminates of one to three layers of planar graphene oxide sheets. Each of the planar graphene oxide sheets has a diameter of about 1 to 3 µm.

### [Preparation of Dispersion Solution]

The titanium-niobium oxide particles and the graphene sheet starting material, obtained as described above, are added into water together with sucrose to prepare a dispersion solution. Whereupon, the contents of the planar graphene oxide sheet starting material and the sucrose are adjusted to 2% by mass and 0.4% by mass relative to the titanium niobium oxide particles, respectively. The pH of the dispersion solution is adjusted to 2 using hydrochloric acid.

### [Completion of Composite]

After the dispersion solution is stirred, water is evaporated to solidify the dispersion solution. The obtained solid is heated under a stream of argon at 800°C for one hour. The obtained solid is pulverized to obtain a composite.

Then, 100 g of the obtained composite is added into 100 g of water in which 3 g of lithium hydroxide is dissolved, which is left in a dryer having a temperature of 70°C while it is stirred to evaporate the water, and then the resulting product is heated in the atmosphere at 400°C for 3 hours to obtain an active material of Example 1 (sample A1).

### <Manufacturing of Test Electrode>

The powder of the active material sample A, obtained as the active material, and polyvinylidene fluoride (PVdF) are added to N-methyl pyrrolidone (NMP), and mixed to prepare a slurry. Whereupon, the powder of sample A and PVdF are mixed at proportions of 95% by mass and 5% by mass, respectively. The slurry is applied onto both surfaces of a current collector formed of an aluminum foil with a thickness of 12 µm to obtain coatings of applied slurry, and the coatings are dried. After that, the coatings are pressed to obtain a test electrode of Example 1.

### <Preparation of Liquid Nonaqueous Electrolyte>

Ethylene carbonate (EC) and diethyl carbonate (DEC) are mixed in a volume ratio of 1:2 to obtain a mixed solvent. LiPF₆, which is an electrolyte, is dissolved in the mixed solvent at a concentration of 1 M to obtain a liquid nonaqueous electrolyte.

### <Manufacturing of Beaker Cell>

A beaker cell of Example 1 is assembled using the test electrode produced in Example 1 as a working electrode and a lithium metal as a counter electrode and a reference electrode. The above liquid nonaqueous electrolyte is injected into the beaker cell to produce a beaker cell of Example 1.

### <Measurement of Battery Performance>

The beaker cell of Example 1, described above, is subjected to discharge at a constant current and a constant voltage of 1 C and 1 V for 3 hours under a temperature environment of 25°C. Then, the beaker cell of Example 1 is subjected to charging at a constant current of 1 C until the voltage reaches 3 V. The combination of one charge and one discharge is defined as one cycle. The beaker cell of Example 1 is subjected to the charge and discharge cycle 100 times, and a capacity after the cycle is performed 100 times relative to an initial capacity is calculated as a capacity retention rate (%). The capacity retention rate is 85%.

### (Comparative Example 1)

In Comparative Example 1, a test electrode of Comparative Example 1 is manufactured in the same manner as in Example 1 except that Ketjen black is used instead of the planar graphene oxide, and a beaker cell of Comparative Example 1 is manufactured using the resulting test electrode.

The beaker cell of Comparative Example 1 is subjected to the same cycle test as that subjected to the beaker cell of Example 1. The initial capacity is comparable to that in Example 1, but the capacity retention rate is 50%.

### (Comparative Example 2)

In Comparative Example 2, a test electrode of Comparative Example 2 is manufactured in the same manner as in Example 1 except that sucrose is not used, and a beaker cell of Comparative Example 2 is manufactured using the resulting test electrode.

The beaker cell of Comparative Example 2 is subjected to the same cycle test as that subjected to the beaker cell of Example 1. The initial capacity is comparable to that in Example 1, but the capacity retention rate is 70%.

### (Example 2)

In Example 2, a test electrode of Example 2 is manufactured in the same manner as in Example 1 except that the synthesis of the active material particles is changed as described below, and a beaker cell of Example 2 is manufactured using the resulting test electrode.

A titanium dioxide (TiO₂) powder having an anatase structure, a niobium pentoxide (Nb₂O₅) powder, and a zirconium dioxide (ZrO₂) are prepared as starting materials. TiO₂, Nb₂O₅ and ZrO₂ are mixed in a mass ratio of 1:3.7:0.17 to obtain a mixture. The thus obtained mixture is sintered at 1100°C for 24 hours. After sintering, the sintered product is pulverized by a dry method using zirconia beads to control the particle size.

Next, a portion of the product powder is analyzed according to a wide-angle X-ray diffraction method explained above. As a result of the analysis, it can be confirmed that the obtained product has the same crystal structure as that of the monoclinic titanium-niobium composite oxide represented by the compositional formula TiNb₂O₇, attributed to JCPDS (Joint Committee on Powder Diffraction Standards): #39-1407 (space group: C2/m).

A portion of the obtained product is subjected to the ICP-AES analysis. From the results thereof and the results of the X-ray analysis, it is found that the product is a monoclinic titanium-niobium-zirconium composite oxide represented by a compositional formula Ti_{0.9}Zr_{0.1}Nb₂O₇.

Using this product as active material particles, a composite is prepared in the same manner as in Example 1. Then, 100 g of the composite is added into 100 g of water in which 3 g of lithium hydroxide is dissolved, which is left in a dryer having a temperature of 70°C while it is stirred to evaporate the water therefrom, and then the resulting product is heated in the atmosphere at 400°C for 3 hours to obtain an active material (sample A2).

Next, using the active material sample A2, a test electrode and a beaker cell of Example 2 are each manufactured in the same manner as in Example 1.

The beaker cell of Example 2 is subjected to the same cycle test as explained in Example 1. The capacity retention rate is 90%.

### (Comparative Example 3)

In Comparative Example 3, a test electrode of Comparative Example 3 is manufactured in the same manner as in Example 2 except that Ketjen black is used instead of the planar graphene oxide, and a beaker cell of Comparative Example 3 is manufactured using the resulting test electrode.

The beaker cell of Comparative Example 3 is subjected to the same cycle test as explained in Example 1. The initial capacity is comparable to that in Example 2, but the capacity retention rate is 60%.

### (Comparative Example 4)

In Comparative Example 4, a test electrode of Comparative Example 4 is manufactured in the same manner as in Example 2 except that sucrose is not used, and a beaker cell of Comparative Example 4 is manufactured using the resulting test electrode.

The beaker cell of Comparative Example 4 is subjected to the same cycle test as that subjected to the beaker cell of Example 1. The initial capacity is comparable to that in Example 2, but the capacity retention rate is 70%.

### (Example 3)

In Example 3, a test electrode of Example 3 is manufactured in the same manner as in Example 1 except that the synthesis of the active material particles is changed as described below, and a beaker cell of Example 3 is manufactured using the resulting test electrode.

A titanium dioxide (TiO₂) powder having an anatase structure and a niobium pentoxide (Nb₂O₅) powder are prepared as starting materials. TiO₂ and Nb₂O₅ are mixed in a mass ratio of 1:3.9 to obtain a mixture. The thus obtained mixture is sintered at 1100°C for 24 hours. After sintering, the sintered product is pulverized by a dry method using zirconia beads to control the particle size.

Next, a part of the product powder is subjected to an analysis according to the wide-angle X-ray diffraction method explained above. As a result of the analysis, it can be confirmed that the obtained product has the same crystal structure as that of the monoclinic titanium-niobium composite oxide represented by the compositional formula TiNb₂O₇, attributed to JCPDS (Joint Committee on Powder Diffraction Standards): #39-1407 (space group: C2/m).

A portion of the obtained product is subjected to ICP-AES analysis. From the results thereof and the results of the X-ray analysis, it is found that the product is a monoclinic titanium-niobium-zirconium composite oxide represented by a compositional formula Ti_{0.9}Nb_{2.1}O₇.

Using the product as active material particles, a composite is prepared in the same manner as in Example 1. Then, 100 g of the composite is added into 100 g of water in which 3 g of lithium hydroxide is dissolved, which is left in a dryer having a temperature of 70°C while it is stirred to evaporate the water therefrom, and then the resulting product is heated in the atmosphere at 400°C for 3 hours to obtain an active material (sample A3).

Next, using the active material sample A3, a test electrode and a beaker cell of Example 3 are each manufactured in the same manner as in Example 1.

The beaker cell of Example 3 is subjected to the same cycle test as explained in Example 1. The capacity retention rate is 85%.

### (Example 4)

In Example 4, a test electrode of Example 4 is manufactured in the same manner as in Example 1 except that maltose is used instead of sucrose, and a beaker cell of Example 4 is manufactured using the resulting test electrode.

The beaker cell of Example 4 is subjected to the same cycle test as explained in Example 1. The capacity retention rate is 90%.

### (Example 5)

In Example 5, a test electrode of Example 5 is manufactured in the same manner as in Example 1 except that oxidized graphene fragments having a diameter of 10 to 50 nm, which are obtained by oxidizing carbon nanofibers produced by a vapor growth method, are used instead of sucrose, and a beaker cell of Example 5 is manufactured using the resulting test electrode.

The beaker cell of Example 5 is subjected to the same cycle test as explained in Example 1. The capacity retention rate is 90%.

### (Example 6)

In Example 6, a test electrode of Example 6 is manufactured in the same manner as in Example 1 except for the synthesis of the graphene sheet starting material, and a beaker cell of Example 6 is manufactured using the resulting test electrode.

The graphene sheet starting material, manufactured in the same manner as in Example 1, is dispersed in water, to which hydrazine hydrate is added, and the mixture is reacted at 90°C. By this procedure, nitrogen atoms are doped. The obtained graphene sheet is subjected to suction filtration. Thus, a graphene sheet starting material of Example 6 is obtained.

A composite of Example 6 is obtained in the same manner as in Example 1 except that the graphene sheet starting material of Example 6 is used, and the pH is adjusted to 0.5. When the composite is analyzed by an XPS measurement, it is found that the nitrogen atoms are included at a percentage of 2 atom% relative to the carbon atoms. From the XPS analysis, it is also found that the number of carbon atoms bonded to the oxygen atoms is included at a percentage of 4% relative to the total number of carbon atoms.

The beaker cell of Example 6 is subjected to the same cycle test as explained in Example 1. The capacity retention rate is 95%.

### (Example 7)

In Example 7, a test electrode of Example 7 is manufactured in the same manner as in Example 1 except for the synthesis of the graphene sheet starting material, and a beaker cell of Example 7 is manufactured using the resulting test electrode.

In Example 7, as the starting material graphite for synthesis of the graphene sheet starting material, CNP 15 manufactured by Ito Graphite Co., Ltd., is used. 5 g of the graphite is made into a powder. A mixed solution of concentrated sulfuric acid and sodium nitrate is cooled so that the temperature is adjusted to about 5°C. The powder is added to the mixed solution adjusted to a temperature of about 5°C. Next, while the mixed liquid is cooled, 15 g of potassium permanganate powder is gradually added to the mixed liquid. Due to the addition of the potassium permanganate powder, the temperature of the solution elevates to about 10°C.

Next, the mixed solution is stirred at room temperature for about 4 hours. After the solution is stirred, water is gradually added to the mixed solution, and the resulting mixture is heated under reflux for 30 minutes. After that, the mixed solution is cooled to room temperature. After cooling, 450 ml of a 2% aqueous hydrogen peroxide solution is added dropwise to the mixed solution. The thus obtained reaction mixture is centrifuged to recover a precipitate.

The recovered precipitate is washed with dilute hydrochloric acid three times. After washing, the precipitate is further centrifuged. After the centrifugation, the precipitate is dried by heating at 80°C under vacuum. Thus, a graphene sheet starting material including the oxidized planar graphene sheets is obtained.

A portion of the obtained graphene sheet starting material is analyzed according to the method explained above. The graphene sheet starting material includes laminates of one to five layers of planar graphene oxide sheets. Each of the planar graphene oxide sheets has a diameter of about 8 to 12 µm.

The planar graphene oxide sheets are dispersed in water, to which hydrazine hydrate is added, and the mixture is reacted at 90°C. By this procedure, nitrogen atoms are doped. The obtained graphene sheet is subjected to suction filtration. Thus, a graphene sheet starting material of Example 7 is obtained.

A composite of Example 7 is obtained in the same manner as in Example 1 except that the graphene sheet starting material of Example 7 is used and the pH is adjusted to 0.5. When the composite is analyzed by an XPS measurement, it is found that the nitrogen atoms are included at a percentage of 1 atom% relative to the carbon atoms. From the XPS analysis, it is also found that the number of carbon atoms bonded to the oxygen atoms is included at a percentage of 3% relative to the total number of the carbon atoms.

The beaker cell of Example 7 is subjected to the same cycle test as explained in Example 1. The capacity retention rate is 95%.

### (Example 8)

In Example 8, a test electrode of Example 8 is manufactured in the same manner as in Example 7 except that graphene oxide fragments having a diameter of 20 to 50 nm, which is obtained by oxidation of earthy graphite, are used instead of sucrose, and a beaker cell of Example 8 is manufactured using the resulting test electrode.

The beaker cell of Example 8 is subjected to the same cycle test as explained in Example 1. The capacity retention rate is 90%.

### (Example 9)

In Example 9, a test electrode of Example 9 is manufactured in the same manner as in Example 1 except for the synthesis of the graphene sheet starting material, and a beaker cell of Example 9 is manufactured using the resulting test electrode.

In Example 9, as the starting material graphite for synthesis of the graphene sheet starting material, XD 150 manufactured by Ito Graphite Co., Ltd., is used. 5 g of the graphite is made into a powder. A mixed solution of concentrated sulfuric acid and sodium nitrate is cooled so that the temperature is adjusted to about 5°C. The powder is added to the mixed solution adjusted to a temperature of about 5°C. Next, while the mixed liquid is cooled, 15 g of potassium permanganate powder is gradually added to the mixed liquid. Due to the addition of the potassium permanganate powder, the temperature of the solution elevates to about 10°C.

Next, the mixed solution is stirred at room temperature for about 4 hours. After the solution is stirred, water is added gradually to the mixed solution, and the resulting mixture is heated under reflux for 30 minutes. After that, the mixed solution is cooled to room temperature. After cooling, 450 ml of a 2% aqueous hydrogen peroxide solution is added dropwise to the mixed solution. The thus obtained reaction mixture is centrifuged to recover a precipitate.

The recovered precipitate is washed with dilute hydrochloric acid three times. After washing, the precipitate is further centrifuged. After the centrifugation, the precipitate is dried by heating at 80°C under vacuum. Thus, a graphene sheet starting material including the oxidized planar graphene sheets is obtained.

A portion of the obtained graphene sheet starting material is analyzed according to the method explained above. The graphene sheet starting material includes laminates of one to eight layers of planar graphene oxide sheets. Each of the planar graphene oxide sheets has a diameter of about 80 to 100 µm.

The planar graphene oxide sheet starting material is dispersed in water, to which hydrazine hydrate is added, and the mixture is reacted at 90°C. By this procedure, nitrogen atoms are doped. The obtained graphene sheet is subjected to suction filtration. Thus, a graphene sheet starting material of Example 9 is obtained.

A composite of Example 9 is obtained in the same manner as in Example 1 except that the graphene sheet material of Example 9 is used and the pH is adjusted to 0.5. When the composite is analyzed by an XPS measurement, it is found that the nitrogen atoms are included at a percentage of 0.2 atom% relative to the carbon atoms. From the XPS analysis, it is also found that the number of carbon atoms bonded to the oxygen atoms is included at a percentage of 2% relative to the total number of the carbon atoms.

The beaker cell of Example 9 is subjected to the same cycle test as explained in Example 1. The capacity retention rate is 90%.

### (Example 10)

In Example 10, a test electrode of Example 10 is manufactured in the same manner as in Example 1 except that, when the dispersion solution is prepared, carbon nanofibers produced by a vapor growth method are further added in a content of 0.2% by mass relative to the titanium-niobium composite oxide particles, thus a beaker cell of Example 10 is manufactured.

The beaker cell of Example 10 is subjected to the same cycle test as explained in Example 1. The capacity retention rate is 95%.

### <Results>

The results in Examples 1 to 10 and Comparative Examples 2 to 4 are shown in the following table.

**[Table 1]**

| | Composition of Active Material | Whether Graphene Sheet Material Exists | Whether Carbon Layer Including Carbon Having π-electron System Exists | Capacity Retention Rate |
|---|---|---|---|---|
| Example 1 | TiNb₂O₇ | yes | yes | 85% |
| Compatative Example 1 | TiNb₂O₇ | no | yes | 50% |
| Comparative Example 2 | TiNb₂O₇ | yes | no | 70% |
| Examples 2 | Ti_{0.9}Zr_{0.1}Nb₂O₇ | yes | yes | 90% |
| Comparative Examples 3 | Ti_{0.9}Z_{r0.1}Nb₂O₇ | no | yes | 60% |
| Comparative Example 4 | Ti_{0.9}Zr_{0.1}Nb₂O₇ | yes | no | 70% |
| Example 3 | Ti_{0.9}Nb_{2.1}O₇ | yes | yes | 85% |
| Example 4 | TiNb₂O₇ | yes | yes | 90% |
| Example 5 | TiNb₂O₇ | yes | yes | 90% |
| Example 6 | TiNb₂O₇ | yes (Nitrogen Doped) | yes | 95% |
| Example 7 | TiNb₂O₇ | yes (Nitrogen Doped) | yes | 95% |
| Example 8 | TiNb₂O₇ | yes (Nitrogen Doped) | yes | 90% |
| Example 9 | TiNb₂O₇ | yes (Nitrogen Doped) | yes | 90% |
| Example 10 | TiNb₂O₇ | yes | yes | 95% |

From the test electrodes of Examples 1 to 10, composites are taken out and subjected to shape observation, as explained above. As a result, it is found that the composites of Examples 1 to 10 have the same structure as shown schematically in FIG. 1.

As apparent from the results shown in Table 1, the beaker cell of Example 1 has a capacity retention rate that is more excellent than those of the beaker cells of Comparative Examples 1 and 2. The same trend is observed between Example 2 and Comparative Examples 3 and 4. Accordingly, the composite including the plurality of the active material particles, the graphene sheet material, and the carbon layer located in between allows a nonaqueous electrolyte battery to be realized, which is capable of exhibiting capacity retention more excellent than a capacity retention of a nonaqueous electrolyte battery that can be realized by a composite not including either the graphene sheet material or the carbon layer.

In addition, as apparent from the results of Examples 1 to 10, the beaker cells of Examples 1 to 10 can exhibit excellent capacity retention regardless of whether, in the composite, the active materials included in the active material particles are different from each other, the graphene sheets included in the graphene sheet material are different from each other, the starting materials for the carbon layer are different from each other, or the additional conductive agent is added.

According to at least one of the embodiments and examples, as explained above, there is provided a composite including the plurality of the active material particles, the graphene material, and the carbon layer. In the composite according to the first embodiment, the plurality of the active material particle and the graphene materials can exhibit excellent bonding owing to the carbon layers located in between them. As a result, the composite according to one embodiment can allow a nonaqueous electrolyte battery capable of exhibiting excellent capacity retention to be realized.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the invention.

## Claims

1. A composite (10) comprising:
a graphene sheet material (13) including at least one of a monoatomic layer of a planar graphene sheet, and a laminate of 10 layers or less of the planar graphene sheets, each of the planar graphene sheets having a diameter within a range of more than 50 nm ϕ and 100 µm ϕ or less;
active material particles (11) including a titanium-niobium composite oxide; and
a carbon layer (12) which includes a carbon material having a π-electron system and is located between the graphene sheet material (13) and the active material particles (11).

2. The composite (10) according to claim 1, wherein the diameter of each of the planar graphene sheets is within a range of 400 nm ϕ to 4 µm ϕ.

3. The composite (10) according to claim 1, wherein
the titanium-niobium composite oxide is represented by a general formula: LiₓTi_{1-y}M1_{y}Nb_{2-z}M2_{z}O₇ wherein indexes x, y and z are within a ranges of 0 ≤ x ≤ 5, 0 ≤ y < 1, and 0 ≤ z < 2, respectively; M1 is at least one element selected from a group consisting of Zr, Si, and Sn; and M2 is at least one element selected from a group consisting of V, Nb, Ta, and Bi.

4. The composite (10) according to claim 1, wherein
the carbon layer (12) partially covers the active material particles (11).

5. The composite (10) according to claim 1, wherein the carbon layer (12) completely covers the active material particles (11).

6. The composite (10) according to claim 1, wherein
the carbon material includes a graphene fragment having a diameter of 50 nm or less.

7. The composite (10) according to claim 1, wherein
the carbon material includes an amorphous carbon having the π-electron system.

8. The composite (10) according to claim 1, wherein
the planar graphene sheet includes at least one of a nitrogen atom and an oxygen atom.

9. An active material comprising the composite (10) according to claim 1.

10. A nonaqueous electrolyte battery (100) comprising:
a negative electrode (3) comprising the active material according to claim 9;
a positive electrode (5); and
a nonaqueous electrolyte.

11. The nonaqueous electrolyte battery (100) according to claim 10 comprising
a lithium ion, sodium ion, or a magnesium ion as a charge carrier.

12. A vehicle comprising the non-aqueous electrolyte battery (100) according to claim 10.

13. The vehicle according to claim 12, wherein the non-aqueous electrolyte battery (100) recovers a regenerative energy of a motive force.

14. A method of manufacturing the composite (10) according to claim 1 comprising:
preparing active material particles (11) including a titanium-niobium composite oxide;
preparing an organic compound having hydroxyl groups;
preparing a graphene sheet starting material including at least one of a monoatomic layer of a planar graphene oxide sheet and a laminate of 10 layers or less of the planar graphene oxide sheets, using graphite as starting material;
adding the active material particles (11), the organic compound, and the graphene sheet starting material into water to prepare a dispersion solution;
adjusting a pH of the dispersion solution to less than 2.5;
removing water from the dispersion solution to obtain a solid mixture; and
heating the solid mixture in an inert atmosphere a heating temperature is from 700°C to 1000°C.

15. The method according to claim 14 wherein
the organic compound is at least one saccharide selected from a group consisting of sucrose, lactose, maltose, trehalose, kojibiose, nigerose, sophorose, laminaribiose, cellobiose, glucose, fructose, allose, ribose, apiose, glycerin, and sorbitol.

## Patentansprüche

1. Verbundstoff (10), umfassend:
ein Graphenfilmmaterial (13), enthaltend mindestens einen Vertreter von einer monoatomaren Schicht aus einem planaren Graphenfilm und einem Laminat von 10 Schichten oder weniger der planaren Graphenfilme, wobei jeder der planaren Graphenfilme einen Durchmesser im Bereich von mehr als 50 nm ϕ und 100 µm ϕ oder weniger aufweist;
Aktivmaterialpartikel (11), enthaltend ein Titan-Niob-Kompositoxid; und
eine Kohlenstoffschicht (12), die ein Kohlenstoffmaterial mit einem π-Elektronensystem enthält und zwischen dem Graphenfilmmaterial (13) und den Aktivmaterialpartikeln (11) angeordnet ist.

2. Verbundstoff (10) gemäß Anspruch 1, wobei
der Durchmesser von jedem der planaren Graphenfilme im Bereich von 400 nm ϕ bis 4 µm ϕ liegt.

3. Verbundstoff (10) gemäß Anspruch 1, wobei
das Titan-Niob-Kompositoxid durch die allgemeine Formel dargestellt wird: LiₓTi_{1-y}M1_{y}Nb_{2-z}M2_{z}O₇, wobei die Indizes x, y und z innerhalb der Bereiche 0 ≤ x ≤ 5, 0 ≤ y < 1 bzw. 0 ≤ z < 2 liegen; M1 mindestens ein Element ist, das aus der Gruppe, bestehend aus Zr, Si und Sn, ausgewählt ist; und M2 mindestens ein Element ist, das aus der Gruppe, bestehend aus V, Nb, Ta und Bi, ausgewählt ist.

4. Verbundstoff (10) gemäß Anspruch 1, wobei
die Kohlenstoffschicht (12) teilweise die Aktivmaterialpartikel (11) bedeckt.

5. Verbundstoff (10) gemäß Anspruch 1, wobei
die Kohlenstoffschicht (12) die Aktivmaterialpartikel (11) vollständig bedeckt.

6. Verbundstoff (10) gemäß Anspruch 1, wobei
das Kohlenstoffmaterial ein Graphenfragment mit einem Durchmesser von 50 nm oder weniger enthält.

7. Verbundstoff (10) gemäß Anspruch 1, wobei
das Kohlenstoffmaterial einen amorphen Kohlenstoff mit dem π-Elektronensystem enthält.

8. Verbundstoff (10) gemäß Anspruch 1, wobei
der planare Graphenfilm mindestens einen Vertreter von einem Stickstoffatom und einem Sauerstoffatom enthält.

9. Aktivmaterial, umfassend den Verbundstoff (10) gemäß Anspruch 1.

10. Batterie (100) mit nicht-wässerigem Elektrolyt, umfassend:
eine negative Elektrode (3), umfassend das Aktivmaterial gemäß Anspruch 9;
eine positive Elektrode (5); und
einen nicht-wässrigen Elektrolyt.

11. Batterie (100) mit nicht-wässerigem Elektrolyt gemäß Anspruch 10, umfassend
ein Lithiumion, ein Natriumion oder ein Magnesiumion als Ladungsträger.

12. Fahrzeug, umfassend die Batterie (100) mit nicht-wässrigem Elektrolyt gemäß Anspruch 10.

13. Fahrzeug gemäß Anspruch 12, wobei
die Batterie (100) mit nicht-wässrigem Elektrolyt eine regenerative Energie einer Antriebskraft zurückgewinnt.

14. Verfahren zur Herstellung des Verbundstoffs (10) gemäß Anspruch 1, umfassend:
das Herstellen von Aktivmaterialpartikel (11), enthaltend ein Titan-Niob-Kompositoxid;
das Herstellen einer organischen Verbindung mit Hydroxylgruppen;
das Herstellen eines Graphenfilm-Ausgangsmaterials, das mindestens einen Vertreter von einer monoatomaren Schicht aus einem planaren Graphenoxidfilm und einem Laminat von 10 Schichten oder weniger der planaren Graphenoxidfilme enthält, unter Verwendung von Graphit als Ausgangsmaterial;
das Hinzufügen der Aktivmaterialpartikel (11), der organischen Verbindung und des Graphenfilm-Ausgangsmaterials zu Wasser zur Herstellung einer Dispersionslösung;
das Einstellen des pH-Werts der Dispersionslösung auf weniger als 2,5;
das Entfernen von Wasser aus der Dispersionslösung, um eine feste Mischung zu erhalten; und
das Erhitzen der festen Mischung in einer inerten Atmosphäre, wobei eine Erwärmungstemperatur 700°C bis 1000°C beträgt.

15. Verfahren gemäß Anspruch 14, wobei
die organische Verbindung mindestens ein Saccharid ist, das aus der Gruppe ausgewählt ist, die aus Saccharose, Lactose, Maltose, Trehalose, Kojibiose, Nigerose, Sophorose, Laminaribiose, Cellobiose, Glucose, Fructose, Allose, Ribose, Apiose, Glycerin und Sorbitol besteht.

## Revendications

1. Composite (10) comprenant :
un matériau en feuille de graphène (13) incluant au moins l'un parmi une couche monoatomique d'une feuille plane de graphène, et un stratifié de 10 couches ou moins de feuilles planes de graphène ; chacune des feuilles planes de graphène ayant un diamètre dans la plage de plus de 50 nm ϕ à 100 µm ϕ ou moins ;
des particules de matériau actif (11) incluant un oxyde composite de titane-niobium ; et
une couche de carbone (12) qui inclut un matériau carboné ayant un système d'électrons n et qui est située entre le matériau de feuille de graphène (13) et les particules de matériau actif (11).

2. Composite (10) selon la revendication 1, dans lequel le diamètre de chacune des feuilles planes de graphène est dans la plage de 400 nm ϕ à 4 µm ϕ.

3. Composite (10) selon la revendication 1, dans lequel l'oxyde composite de titane-niobium est représenté par une formule générale : LiₓTi_{1-y}M1_{y}Nb_{2-z}M2_{z}O₇ où les indices x, y et z sont dans des plages de 0 ≤ x ≤ 5, 0 ≤ y <1 et 0 ≤ z <2, respectivement ; M1 est au moins un élément choisi dans un groupe constitué de Zr, Si et Sn ; et M2 est au moins un élément choisi dans un groupe constitué de V, Nb, Ta et Bi.

4. Composite (10) selon la revendication 1, dans lequel la couche de carbone (12) recouvre partiellement les particules de matériau actif (11).

5. Composite (10) selon la revendication 1, dans lequel la couche de carbone (12) recouvre complètement les particules de matériau actif (11).

6. Composite (10) selon la revendication 1, dans lequel le matériau de carbone inclut un fragment de graphène ayant un diamètre de 50 nm ou moins.

7. Composite (10) selon la revendication 1, dans lequel le matériau carboné comprend un carbone amorphe ayant le système d'électrons π.

8. Composite (10) selon la revendication 1, dans lequel la feuille plane de graphène inclut au moins l'un parmi un atome d'azote et un atome d'oxygène.

9. Matériau actif comprenant le composite (10) selon la revendication 1.

10. Batterie à électrolyte non aqueux (100) comprenant :
une électrode négative (3) comprenant le matériau actif selon la revendication 9 ;
une électrode positive (5) ; et
un électrolyte non aqueux.

11. Batterie à électrolyte non aqueux (100) selon la revendication 10, comprenant un ion lithium, un ion sodium, ou un ion magnésium comme support de charge.

12. Véhicule comprenant la batterie à électrolyte non aqueux (100) selon la revendication 10.

13. Véhicule selon la revendication 12, dans lequel la batterie à électrolyte non aqueux (100) permet de récupérer l'énergie renouvelable d'une force motrice.

14. Procédé de fabrication du composite (10) selon la revendication 1 comprenant :
préparer des particules de matériau actif (11) comprenant un oxyde composite de titane-niobium ;
préparer un composé organique ayant des groupes hydroxyle ;
préparer un matériau de départ en feuille de graphène incluant au moins l'un parmi une couche monoatomique d'une feuille plane d'oxyde de graphène et un stratifié de 10 couches ou moins des feuilles planes d'oxyde de graphène, en utilisant du graphite comme matériau de départ ;
ajouter les particules de matériau actif (11), le composé organique et le matériau de départ de feuille de graphène dans de l'eau pour préparer une solution de dispersion ;
ajuster un pH de la solution de dispersion à moins de 2,5 ;
éliminer l'eau de la solution de dispersion pour obtenir un mélange solide ; et
chauffer le mélange solide dans une atmosphère inerte, la température de chauffage étant de 700 °C à 1000 °C.

15. Procédé selon la revendication 14, dans lequel le composé organique est au moins un saccharide choisi dans le groupe consistant en saccharose, lactose, maltose, tréhalose, kojibiose, nigerose, sophorose, laminaribiose, cellobiose, glucose, fructose, allose, ribose, apiose, glycérine, et sorbitol.
